# EUROPÄISCHE PATENTSCHRIFT

(11) **EP 1 080 955 B1**
(45) Veröffentlichungstag und Bekanntmachung des Hinweises auf die Patenterteilung: **20.11.2002**
(21) Anmeldenummer: 00118817.6
(22) Anmeldetag: 31.08.2000
(51) Int. Cl.: B60H 1/00

(54) **Vorrichtung zur Verhinderung des Kondensierens von Luftfeuchtigkeit auf einer Innenfläche, insbesondere der Windschutzscheibe eines Fahrzeug-Innenraums**
Apparatus for preventing the condensing of air moisture on an internal surface, in particular of the windscreen in a motor vehicle interior
Dispositif pour prévenir la condensation d'air humide sur une surface intérieure, en particulier le pare-brise a l'intérieur d'un véhicule automobile

(30) Priorität: 04.09.1999 DE 19942286
(43) Veröffentlichungstag der Anmeldung: 07.03.2001
(73) Patentinhaber: Behr-Hella Thermocontrol GmbH, D-70469 Stuttgart (DE)
(72) Erfinder: Knittel, Otto, 59494 Soest, Westfalen (DE); Moersch, Volker, 59555 Lippstadt (DE); Ruf, Christoph, 59581 Warstein (DE)
(74) Vertreter: Hilleringmann, Jochen, Dipl.-Ing.

(56) Entgegenhaltungen:
- EP-A- 0 316 545
- EP-B- 0 314 674
- FR-A- 2 728 514

## Beschreibung

Die Erfindung betrifft eine Vorrichtung zur Verhinderung des Kondensierens von in der Luft im Innenraum eines Fahrzeuges enthaltener Feuchtigkeit auf einer Fläche des Innenraums, insbesondere auf der Innenseite der Windschutzscheibe.

Was die Regelung und den Komfort von Fahrzeugklimaanlagen betrifft, so sind in der Vergangenheit in zunehmendem Maße Anstrengungen unternommen worden, um auch im Falle unterschiedlichster Umgebungsbedingungen das Klima im Insassenraum des Fahrzeuges komfortabel und für die Insassen angenehm zu gestalten. U.a. sind dabei auch Klimaanlagen vorgeschlagen worden, bei denen ein Beschlagen der Windschutzscheibe verhindert werden soll. Derartige Klimaanlagen sind beispielsweise in EP-B-0 718 165, EP-B-0 316 545, EP-B-0 314 674 (Oberbegriff des Anspruchs 1), DE-C-195 40 566, DE-A-43 16 557, DE-A-38 36 559 und DE-A-37 39 327 beschrieben. Bei all diesen bekannten Klimaanlagen wird aufgrund systembedingt vorliegender Messwerte für den jeweils aktuellen Betriebszustand der Klimaanlage und des Fahrzeugs abgeschätzt, ob die Tendenz besteht, dass die Windschutzscheibe von innen beschlägt. Die hierzu entwickelten Algorithmen sind mitunter recht aufwendig, wobei die Ergebnisse nicht immer zutreffend sind.

Der Erfindung liegt die Aufgabe zugrunde, eine Vorrichtung zur Verhinderung des Kondensierens von Luftfeuchtigkeit auf insbesondere der Innenfläche der Windschutzscheibe eines Fahrzeug-Insassenraums zu schaffen, bei der in zuverlässiger Weise vor Beginn der Betauung der Windschutzscheibe durch Veränderung der Bedingungen, unter denen (Um- oder Frisch-)Luft in den Fahrzeug-Insassenraum einströmt, entgegengewirkt wird.

Zur Lösung dieser Aufgabe wird mit der Erfindung eine Vorrichtung zur Verhinderung des Kondensierens von Luftfeuchtigkeit auf insbesondere der Innenfläche der Windschutzscheibe eines Fahrzeug-Insassenraums vorgeschlagen, die versehen ist mit
- einer Luftstromerzeugungsvorrichtung zum Erzeugen einer Strömung von in den Innenraum einströmender Luft,
- einer Luftverteilvorrichtung zum Verteilen der Luft auf ein oder mehrere Gruppen von Luftausströmöffnungen, wobei jede Gruppe mindestens eine Luftausströmöffnung aufweist und mindestens eine der Gruppe eine Innenflächen-Luftanströmöffnung aufweist, die derart angeordnet ist, dass die ausströmende Luft die Innenfläche des Innenraums anströmt,
- einer Luftentfeuchtungsvorrichtung zum Entfeuchten der in den Innenraum des Fahrzeuges einströmenden Luft,
- einem Temperatursensor zur Ermittlung der Lufttemperatur insbesondere in der Nähe der Innenfläche des Innenraums des Fahrzeuges,
- einem Feuchtigkeitssensor zur Ermittlung der relativen Luftfeuchtigkeit der Luft in der Nähe der Innenfläche des Innenraums des Fahrzeuges,
- einer Taupunktermittlungsvorrichtung zur Ermittlung der Taupunkttemperatur anhand der Messsignale des Temperatursensors und des Feuchtigkeitssensors,
- einem Außentemperatursensor zur Ermittlung der Umgebungstemperatur des Fahrzeuges,
- einer Geschwindigkeits-Messvorrichtung zur Ermittlung der Fahrzeuggeschwindigkeit,
- einer Strömungsgeschwindigkeits-Ermittlungsvorrichtung zur Ermittlung der Geschwindigkeit der Luftströmung,
- einem in der oder in der Nähe der mindestens einen Innenflächen-Luftanströmöffnung angeordneten Luftströmungs-Temperatursensor zur Ermittlung der Temperatur der Luftströmung,
- einer Steuereinheit, die mit der Taupunktermittlungsvorrichtung, den Sensoren, der Strömungsgeschwindigkeits-Ermittlungsvorrichtung und der Geschwindigkeits-Messvorrichtung verbunden ist und die anhand der Fahrzeuggeschwindigkeit, der Umgebungstemperatur und der Temperatur sowie der Geschwindigkeit der aus der mindestens einen Innenflächen-Luftanströmöffnung die Temperatur der Innenfläche errechnet und die dann, wenn die ermittelte Ist-Temperatur der Innenfläche kleiner ist als ein Temperaturschwellwert, der um eine vorgebbare Differenz oberhalb der Taupunkttemperatur liegt, an die Luftverteilvorrichtung, die Luftstromerzeugungsvorrichtung und/oder die Luftentfeuchtungsvorrichtung ein Ansteuerungssignal ausgibt.

Bei der erfindungsgemäßen Vorrichtung wird die Temperatur der vor einem Beschlagen zu schützenden Innenfläche des Innenraums (nachfolgend wird der Einfachheit halber stets von der Windschutzscheibe als einem Beispiel für diese Innenfläche gesprochen) errechnet (simuliert). Anhand der Temperatur und der relativen Feuchtigkeit der Luft in der Nähe der Windschutzscheibe, die beide mittels entsprechender Sensoren ermittelt werden, wird der Taupunkt mittels einer Taupunktermittlungsvorrichtung errechnet. Anschließend wird der ermittelte Taupunkt mit der errechneten Temperatur der Windschutzscheibe verglichen. Solange die errechnete Temperatur der Windschutzscheibe in diesem Teilbereich deutlich höher als der Taupunkt liegt, ist mit einem Beschlagen der Windschutzscheibe nicht zu rechnen. Sollte aber bei dem Vergleich festgestellt werden, dass die errechnete Temperatur der Windschutzscheibe kleiner ist als ein Temperaturschwellwert, der um eine vorgebbare Differenz oberhalb der Taupunkttemperatur liegt, so wird die Verteilung der einströmenden Luft auf die unterschiedlichen Ausströmöffnungen (Mannanström-, Defrost- und Fußraumausströmöffnungen), der Durchsatz der einströmenden Luft, die Ansaugung der Luft (Frischluft oder Umluft) verändert und/oder, falls möglich, der Entfeuchtigungsgrad der einströmenden Luft erhöht.

Die Ermittlung der Windschutzscheiben-Temperatur erfolgt bei der Erfindung anhand der messtechnisch ermittelten Umgebungstemperatur des Fahrzeuges, der Geschwindigkeit des Fahrzeuges (für Ermittlung der Fahrtwindströmung außen auf der Windschutzscheibe) und, was im Rahmen der Erfindung ganz wesentlich ist, der anhand messtechnischer oder rechnerischer Ermittlung der Geschwindigkeit und der Temperatur der Luftströmung, die aus denjenigen Luftausströmöffnungen, die in Richtung auf die Windschutzscheibe gerichtet sind, in den Innenraum des Fahrzeuges einströmt. Hierzu ist im Bereich mindestens einer der Windschutzscheiben-Luftanströmöffnungen (im nachfolgenden auch Defrost-Ausströmöffnung genannt) ein Temperatursensor angeordnet. Durch den Temperatursensor und die Strömungsgeschwindigkeits-Ermittlungsvorrichtung kann ermittelt werden, welche Wärmeenergie in Richtung auf die Windschutzscheibe transportiert wird. Für die gesamte Windschutzscheiben-Temperaturberechnung sind empirisch gewonnene Daten erforderlich, die von Fahrzeugtyp zu Fahrzeugtyp unterschiedlich sind. Dies liegt daran, dass in die Errechnung der Windschutzscheiben-Temperatur die Neigung der Windschutzscheibe, die Nähe und Ausrichtung der Defrost-Ausströmöffnungen und nicht zuletzt auch die Beschaffenheit der Windschutzscheibe (Materialwahl) eingehen. Durch die zusätzliche Kenntnis der Geschwindigkeit und der Temperatur der die Windschutzscheibe anströmenden Luft kann wesentlich exakter als allein durch die Geschwindigkeit und die Außentemperatur sowie gegebenenfalls noch die Sonnenstrahlungsintensität auf die Temperatur an der Innenseite der Windschutzscheibe geschlossen werden.

Die Temperatur und die Geschwindigkeit der aus der mindestens einen Innenflächen-Luftanströmöffnung austretenden Luftströmung ist ein Maß für die Wärmeenergie bzw. Wärmeleistung, der die vor einem Beschlagen zu schützende Fläche des Fahrzeug-Innenraums ausgesetzt ist. Zuverlässige Werte für die Strömungsgeschwindigkeit können bevorzugt dadurch erhalten werden, dass die Strömungsgeschwindigkeits-Ermittlungsvorrichtung einen Strömungsgeschwindigkeitssensor aufweist, der in der oder in der Nähe der mindestens einen Innenflächen-Luftanströmöffnung angeordnet ist. Alternativ bzw. zusätzlich kann die Strömungsgeschwindigkeit aber auch anhand der aktuellen Einstellungen der Luftstromerzeugungsvorrichtung und der Luftverteilvorrichtung ermittelt werden. Die aktuelle Einstellung der Luftstromerzeugungsvorrichtung ist ein Maß für den aktuellen Luftdurchsatz, während die aktuelle Einstellung der Luftverteilvorrichtung angibt, welcher Anteil dieses Luftdurchsatzes zur vor einem Beschlagen zu schützenden Fläche des Fahrzeug-Innenraums gelangt.

Der Temperatursensor sowie der Feuchtigkeitssensor, mit denen einerseits die Temperatur und die relative Feuchtigkeit der in der Nähe der Windschutzscheibe angeordneten Luftschichtung ermittelt werden, können grundsätzlich an beliebiger Stelle im Fahrzeug-Innenraum angeordnet sein, so lange die Abhängigkeiten der Parameter Temperatur und Feuchtigkeit am Ort der Sensoren zu den entsprechenden Werten nahe der Innenseite der Windschutzscheibe bekannt sind. Insoweit von Vorteil ist es, wenn diese beiden Sensoren direkt in unmittelbarer Nähe der Windschutzscheibe angeordnet werden. Da man es vermeiden sollte, im Sichtfeld der Windschutzscheibe Sensoren anzuordnen, werden der Windschutzscheibensensor und, sofern als Sensor ausgelegt, die Strömungsgeschwindigkeits-Ermittlungsvorrichtung bevorzugt beispielsweise in der Halterung des Rückspiegels oder im Bereich des an die Windschutzscheibe angrenzenden Randes des Dachhimmels angeordnet.

Bei dem Windschutzscheibensensor oder, allgemeiner ausgedrückt, bei dem Temperatursensor für die vor einem Beschlagen zu schützende Fläche im Fahrzeug-Innenraum kann es sich um einen die Fläche kontaktierenden und/oder um einen berührungslos messenden Sensor handeln.

In vorteilhafter Weiterbildung der Erfindung ist vorgesehen, dass die Vorrichtung zur Verhinderung des Kondensierens von Feuchtigkeit zusätzlich noch einen Sonnensensor aufweist, der die Intensität der auf die Innenfläche der Windschutzscheibe auftreffenden Sonnenstrahlung misst. Somit wird auch die über die Sonnenstrahlung erfolgende Erwärmung der Innenfläche berücksichtigt, wenn es darum geht, die Beschlagsneigung der Windschutzscheibe zu ermitteln.

Sofern die erfindungsgemäße Vorrichtung über eine Umluft/Frischluft-Einstellvorrichtung verfügt, ist es zweckmäßig, wenn das Ansteuersignal der Steuereinheit, das diese in Abhängigkeit von der Beschlagsneigung der Windschutzscheibe erzeugt, ebenfalls auch auf diese Einstellvorrichtung einwirkt.

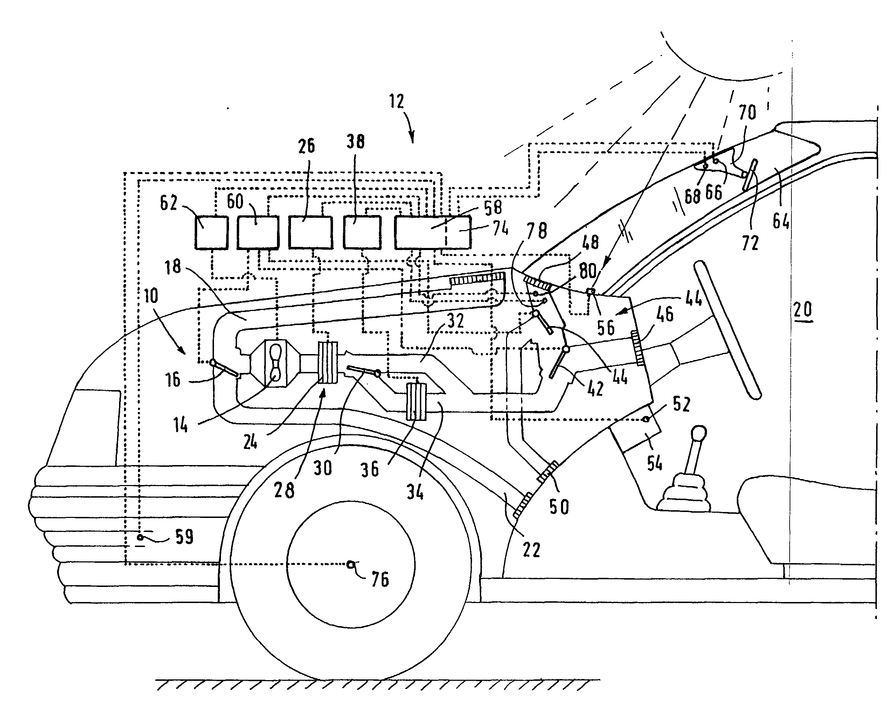

Nachfolgend wird anhand der Zeichnung ein Ausführungsbeispiel der Erfindung näher erläutert. In der Zeichnung ist der vordere Teil eines Kraftfahrzeuges (PKW) mit einer Klimaanlage und einer Vorrichtung zur Verhinderung des Beschlagens der Windschutzscheibe dargestellt.

Gemäß der Zeichnung weist eine Klimaanlage 10 für ein Kraftfahrzeug 12 ein Gebläse 14 auf, das in Abhängigkeit von der Stellung einer Frischluft-/ Umluftklappe 16 Frischluft aus einem Frischluft-Ansaugkanal 18 oder Umluft aus einem im Insassenraum 20 endenden Umluftkanal 22 ansaugt. In Strömungsrichtung betrachtet hinter dem Gebläse 14 befindet sich ein Kompressor 24 zum Abkühlen der Ansaugluft, der von einer Ansteuerungsvorrichtung 26 ansteuerbar ist. Beim Abkühlen der Ansaugluft wird diese entfeuchtet, weshalb der Kompressor 24 Teil einer Luftentfeuchtungsvorrichtung 28 ist. Die abgekühlte und entfeuchtet Luft gelangt in Abhängigkeit der Stellung einer Mischerklappe 30 in einen von zwei zueinander parallelgeschalteten Kanäle 32,34. Einer dieser beiden Kanäle (im Ausführungsbeispiel der Kanal 34) weist einen Wärmetauscher 36 zum Erwärmen der zuvor abgekühlten Luft auf. Dieser Wärmetauscher 36 ist über eine Ansteuerungsvorrichtung 38 ansteuerbar. Hinter dem Wärmetauscher 36 sind die beiden Kanäle 32,34 wieder zusammengeführt. Im Anschluss daran schließt sich die Luftverteilvorrichtung 40 an, die zwei Klappen 42,44 aufweist, um die Luft wahlweise über die Mannanströmöffnungen 46, die Defrostöffnungen 48 und/oder die Fußraumausströmöffnungen 50 in den Innenraum 20 einzulassen.

Die Steuerung der gesamten Klimaanlage 10 erfolgt dergestalt, dass eine vorgebbare Solltemperatur für den Innenraum 20 erreicht und gehalten wird. Zu diesem Zweck weist die Klimaanlage 10 einen Innenraum-Temperaturfühler 52 auf, der im Steuerungsgerät 54 untergebracht ist. Ferner ist die Klimaanlage 10 mit mindestens einem Sonnensensor 56, der die Intensität der Sonneneinstrahlung erfasst und einen Außentemperatursensor 59 versehen, der die Umgebungstemperatur misst. Sämtliche Sensoren sind mit einer zentralen Steuereinheit 58 verbunden, die ihrerseits mit den Stellgliedern (Ansteuerungsvorrichtungen 26,38) für den Kompressor 24 und den Wärmetauscher 36 sowie mit Antriebsvorrichtungen 60,62 für die Klappen 16,42,44 bzw. das Gebläse 14 verbunden ist.

Um verhindern zu können, dass die Windschutzscheibe 64 des Fahrzeuges 12 beschlägt, ist die hier beschriebene und in der Zeichnung dargestellte Klimaanlage 10 mit einem System zur Erfassung einer Beschlagsneigung der Innenseite der Windschutzscheibe 62 versehen. Dieses Feuchtigkeitserfassungssystem weist einen Feuchtigkeitssensor 66 und in unmittelbarer Nähe zu diesem und mit diesem thermisch gekoppelten Temperatursensor 68 auf, die beide in unmittelbarer Nähe der Windschutzscheibe 64 angeordnet sind. Im hier beschriebenen Ausführungsbeispiel sind diese beiden Sensoren in der Halterung 70 des Rückspiegels 72 untergebracht. Die Halterung 70 weist Lüftungsschlitze auf, so dass sie von der aus den Defrost-Ausströmöffnungen 48 ausströmenden und an der Innenseite der Windschutzscheibe 64 entlangstreichenden Luft durchströmt werden kann. Auf diese Weise messen also die beiden Sensoren die Feuchtigkeit und die Temperatur dieser Luftströmung. Die beiden Sensoren 66,68 sind mit einer Taupunktermittlungsvorrichtung 74 verbunden. Diese Taupunktermittlungsvorrichtung 74 steht ebenfalls in elektrischer Verbindung mit der Steuereinheit 58. Dieser Steuereinheit 58 wird ferner das Signal einer Geschwindigkeits-Messvorrichtung 76 zugeführt, die die Geschwindigkeit des Fahrzeuges misst.

Anhand der von dem Innenraum-Temperatursensor 52 und dem Feuchtigkeitssensor 66 gelieferten Werte für die Temperatur und die relative Luftfeuchtigkeit nahe der Windschutzscheibe 64 wird mittels der Taupunktermittlungsvorrichtung 74, die Teil der zentralen Steuereinheit 58 sein kann, der unter Berücksichtigung der mit dem Feuchtigkeitssensor 66 gemessenen relativen Luftfeuchtigkeit sich ergebende Taupunkt berechnet. Dieser Taupunkt wird mit der Temperatur der Windschutzscheibe 64 verglichen. Liegt die Temperatur der Windschutzscheibe 64 in ausreichendem Maße oberhalb des Taupunktes, so ist ein Beschlagen der Windschutzscheibe 64 nicht zu befürchten. Sollte dagegen dieser fahrzeugspezifisch zu bestimmende Mindestabstand zwischen dem errechneten Taupunkt und der Temperatur der Windschutzscheibe 64 nicht gegeben sein, so gibt die Steuereinheit 58 z.B. an die Ansteuerungsvorrichtung 26 ein Ansteuerungssignal zum Einschalten des Kompressors 24 der Luftentfeuchtungsvorrichtung 28 aus. Bevorzugt wird jedoch zuvor versucht, dem Beschlagen durch Ansteuerung der Ansteuervorrichtung 60,62, d.h. dadurch zu begegnen, dass die Luftverteilung und/oder der Luftdurchsatz verändert und/oder die Lufttemperatur verändert werden.

Die Besonderheit der hier beschriebenen und in der Zeichnung dargestellten Klimaanlage 10 ist in der Ermittlung der Temperatur der Windschutzscheibe 64 zu sehen. Diese Temperatur wird nämlich unter Berücksichtigung der Außentemperatur, der Fahrzeuggeschwindigkeit und der Temperatur sowie der Geschwindigkeit der aus den Defrost-Auslassöffnungen 68 ausströmenden Luft ermittelt. Hierzu sind ein Temperatursensor 78 und ein Strömungsgeschwindigkeitssensor 80 in der oder in der Nähe der Defrostöffnung 48 angeordnet. Beide Sensoren sind mit der Steuereinheit 58 verbunden. Über ein Rechenmodell, das auf empirischen Untersuchungen basiert, kann anhand dieser Größen recht zuverlässig die Windschutzscheiben-Temperatur ermittelt werden. Dadurch, dass in unmittelbarer Nähe der Windschutzscheibe 64 die Luftfeuchtigkeit und die Temperatur im Innenraum 20 gemessen wird, kann recht genau gesagt werden, inwieweit sich die Windschutzscheiben-Temperatur vom Taupunkt der in unmittelbarer Nähe der Scheibe befindlichen Luftschichtung unterscheidet. Damit kann eine sich abzeichnende Betauung der Windschutzscheibe zuverlässig detektiert und rechtzeitig durch entsprechende Gegenmaßnahmen (Herabsetzen der Verdampfertemperatur, Erhöhung des Luftdurchsatzes durch die Defrostöffnungen, indem die Gebläseleistung erhöht und/oder die Luftverteilung zur Defrostöffnung hin konzentriert wird, Erhöhung der Lufttemperatur, Erwärmung der Scheibe über Scheibenheizung, sofern vorhanden, Umschalten aus Umschalt- in Frischluftbetrieb oder umgekehrt bzw. in einen Umluft/Frischluft-Zwischenbetriebszustand) verhindert werden.

### BEZUGSZEICHENLISTE

- 10: Klimaanlage
- 12: Kraftfahrzeug
- 14: Gebläse
- 16: Umluftklappe
- 18: Frischluft-Ansaugkanal
- 20: Innenraum
- 22: Umluftkanal
- 24: Kompressor
- 26: Ansteuerungsvorrichtung
- 28: Luftentfeuchtungsvorrichtung
- 30: Mischerklappe
- 32: Kanäle
- 34: Kanäle
- 36: Wärmetauscher
- 38: Ansteuerungsvorrichtung
- 40: Luftverteilvorrichtung
- 42: Klappen
- 44: Klappen
- 46: Mannanströmöffnungen
- 48: Defrostöffnung
- 50: Fußraumraumausströmöffnung
- 52: Innenraum-Temperaturfühler
- 54: Steuerungsgerät
- 56: Sonnensensor
- 58: Steuereinheit
- 59: Außentemperatursensor
- 60: Antriebsvorrichtungen
- 62: Antriebsvorrichtungen
- 64: Windschutzscheibe
- 66: Feuchtigkeitssensor,
- 68: Temperatursensor
- 70: Halterung
- 72: Rückspiegel
- 74: Taupunktermittlungsvorrichtung
- 76: Geschwindigkeits-Messvorrichtung
- 78: Luftströmungs-Temperatursensor
- 80: Strömungsgeschwindigkeitssensor

## Patentansprüche

1. Vorrichtung zur Verhinderung des Kondensierens von Feuchtigkeit, die in der Luft in dem Innenraum eines Fahrzeugs enthalten ist, auf einer Innenfläche des Innenraums, insbesondere der Windschutzscheibe, mit
- einer Luftstromerzeugungsvorrichtung (14) zum Erzeugen einer Strömung von in den Innenraum (20) einströmender Luft,
- einer Luftverteilvorrichtung (40) zum Verteilen der Luft auf ein oder mehrere Gruppen von Luftausströmöffnungen (46,48,50), wobei jede Gruppe mindestens eine Luftausströmöffnung (46,48,50) aufweist und mindestens eine der Gruppe eine Innenflächen-Luftanströmöffnung (48) aufweist, die derart angeordnet ist, dass die ausströmende Luft die Innenfläche des Innenraums anströmt,
- einer Luftentfeuchtungsvorrichtung (28) zum Entfeuchten der in den Innenraum (20) des Fahrzeuges einströmenden Luft,
- einem Temperatursensor (68) zur Ermittlung der Lufttemperatur insbesondere in der Nähe der Innenfläche (64) des Innenraums (20) des Fahrzeuges,
- einem Feuchtigkeitssensor (66) zur Ermittlung der relativen Luftfeuchtigkeit der Luft in der Nähe der Innenfläche (64) des Innenraums (20) des Fahrzeuges,
- einer Taupunktermittlungsvorrichtung (74) zur Ermittlung der Taupunkttemperatur anhand der Messsignale des Temperatursensors (68) und des Feuchtigkeitssensors (66),
- einem Außentemperatursensor (59) zur Ermittlung der Umgebungstemperatur des Fahrzeuges,
- einer Geschwindigkeits-Messvorrichtung (76) zur Ermittlung der Fahrzeuggeschwindigkeit,
und **gekennzeichnet** mit
- einer Strömungsgeschwindigkeits-Ermittlungsvorrichtung zur Ermittlung der Geschwindigkeit der aus der Innenflächen-Luftanströmöffnung (48) ausströmenden Luftströmung,
- einem in der oder in der Nähe der mindestens einen Innenflächen-Luftanströmöffnung angeordneten Luftströmungs-Temperatursensor (78) zur Ermittlung der Temperatur der Luftströmung,
- einer Steuereinheit (58), die mit der Taupunktermittlungsvorrichtung (74), den Sensoren (59,66,68,78), der Strömungsgeschwindigkeits-Ermittlungsvorrichtung und der Geschwindigkeits-Messvorrichtung (76) verbunden ist und die anhand der Fahrzeuggeschwindigkeit, der Umgebungstemperatur und der Temperatur sowie der Geschwindigkeit der aus der mindestens einen Innenflächen-Luftanströmöffnung die Temperatur der Innenfläche (64) errechnet und die dann, wenn die ermittelte Ist-Temperatur der Innenfläche (64) kleiner ist als ein Temperaturschwellwert, der um eine vorgebbare Differenz oberhalb der Taupunkttemperatur liegt, an die Luftverteilvorrichtung (40), die Luftstromerzeugungsvorrichtung (14) und/oder die Luftentfeuchtungsvorrichtung (28) ein Ansteuerungssignal ausgibt.

2. Vorrichtung nach Anspruch 1, **dadurch gekennzeichnet, dass** die Strömungsgeschwindigkeits-Ermittlungsvorrichtung einen in der oder in der Nähe der mindestens einen Innenflächen-Luftanströmöffnung (48) angeordneten Strömungsgeschwindigkeitssensor (80) aufweist.

3. Vorrichtung nach Anspruch 1 oder 2, **dadurch gekennzeichnet, dass** die Strömungsgeschwindigkeits-Ermittlungsvorrichtung die Strömungsgeschwindigkeit anhand der Einstellungen der Luftstromerzeugungsvorrichtung (14) und der Luftverteilvorrichtung (40) ermittelt.

4. Vorrichtung nach Anspruch 2 und 3, **dadurch gekennzeichnet, dass** die Strömungsgeschwindigkeits-Ermittlungsvorrichtung die Strömungsgeschwindigkeit anhand des Messsignals des Strömungsgeschwindigkeitssensors (80) und der Einstellungen der Luftstromerzeugungsvorrichtung (14) und der Luftverteilvorrichtung (40) ermittelt.

5. Vorrichtung nach einem der Ansprüche 1 bis 4, **dadurch gekennzeichnet, dass** ein Sonnensensor zur Ermittlung der Intensität der auf die Innenfläche (64) auftreffenden Sonnenstrahlung vorgesehen ist, wobei der Sonnensensor mit der Steuereinheit (58) verbunden ist und die Steuereinheit (58) die Temperatur der Innenfläche (64) auch unter Berücksichtigung der Sonnenstrahlungsintensität errechnet.

6. Vorrichtung nach einem der Ansprüche 1 bis 5, **dadurch gekennzeichnet, dass** eine Umluft-Frischluft-Einstellvorrichtung (16) vorgesehen ist, auf die das Ansteuersignal der Steuereinheit (58) ebenfalls einwirken kann.

7. Vorrichtung nach einem der Ansprüche 1 bis 6, **dadurch gekennzeichnet, dass** der Feuchtigkeitssensor (68) und der in der Nähe der Innenfläche (64) angeordnete Temperatursensor (68) und - sofern vorhanden - der Strömungsgeschwindigkeitssensor (80) in einer an der Windschutzscheibe angeordneten Halterung (70) eines Rückspiegels (72) untergebracht und der Luftströmung ausgesetzt sind.

## Claims

1. Apparatus for preventing condensing of humidity contained in the air in the interior of a vehicle on an inner surface of the interior, in particular the windshield, the apparatus comprising:
- an air flow generating device (14) for generating a flow of air flowing into the interior (20),
- an air distribution device (40) for distributing the air to one or a plurality of groups of air outflow openings (46,48,50), wherein each group comprises at least one air outflow opening (46,48, 50), and at least one of the groups comprises an air outflow opening (48) to the inner surface arranged such that the outflowing air flows to the inner surface of the interior,
- an air dehumidifying device (28) for dehumidifying the air flowing into the interior (20) of the vehicle,
- a temperature sensor (68) for determining the air temperature, in particular near the inner surface (64) of the interior (20) of the vehicle,
- a humidity sensor (66) for determining the relative humidity of the air near the inner surface (64) of the interior (20) of the vehicle,
- a dew point determining device (74) for determining the dew point temperature on the basis of the measuring signals of the temperature sensor (68) and the humidity sensor (66),
- an outside temperature sensor (59) for determining the ambient temperature of the vehicle,
- a velocity measuring device (76) for determining the vehicle velocity,
and **characterized by**
- a flow velocity determining device for determining the velocity of the air flow flowing out of the air outflow opening (48) to the inner surface,
- an air flow temperature sensor (78) for determining the temperature of the air flow, arranged in or near the at least one air outflow opening to the inner surface,
- a control unit (58) connected with the dew point determining device (74), the sensors (59/66/68,78), the flow velocity determining device and the velocity measuring device (76) and arranged for calculating, on the basis of the vehicle velocity, the ambient temperature and the temperature and the velocity of the air flowing out of the at least one air outflow opening to the inner surface, the temperature of the inner surface (64), and, if the determined actual temperature of the inner surface (64) is lower than a temperature threshold value which exceeds the dew point temperature by a presettable difference, issuing a control signal to the air distribution device (40), the air flow generating device (14) and/or the air dehumidifying device (28).

2. Apparatus according to claim 1, **characterized in that** the flow velocity determining device comprises a flow velocity sensor (80) arranged in or near the at least one air outflow opening (48) to the inner surface.

3. Apparatus according to claim 1 or 2, **characterized in that** the flow velocity determining device determines the flow velocity on the basis of the adjustments of the air flow generating device (14) and the air distributing device (40).

4. Apparatus according to claim 2 and 3, **characterized in that** the flow velocity determining device determines the flow velocity on the basis of the measuring signal of the flow velocity sensor (80) and the adjustments of the air flow generating device (14) and the air distributing device (40).

5. Apparatus according to one of claims 1 to 4, **characterized in that** a sun sensor for determining the intensity of the sun radiation impinging onto the inner surface (64) is provided, wherein the sun sensor is connected with the control unit (58), and the control unit (58) calculates the temperature of the inner surface (64) taking into consideration the sun radiation intensity.

6. Apparatus according to one of claims 1 to 5, **characterized in that** a circulating air/fresh air adjusting device (16) is provided upon which the control signal of the control unit (58) may act either.

7. Apparatus according to one of claims 1 to 6, **characterized in that** the humidity sensor (66) and the temperature sensor (68) arranged near the inner surface (64) and, if provided, the flow velocity sensor (80) are accommodated in a rearview mirror (72) holding fixture (70) arranged on the windshield, and exposed to the air flow.

## Revendications

1. Dispositif pour prévenir la condensation de l'humidité, contenue dans l'air se trouvant dans l'habitacle d'un véhicule, sur une surface intérieure de l'habitacle, en particulier le pare-brise, avec
- un dispositif de production d'écoulement d'air (14) pour produire un écoulement d'air pénétrant dans l'habitacle (20),
- un dispositif de distribution d'air (40) pour distribuer l'air sur un ou plusieurs groupes d'ouvertures de sortie d'air (46, 48, 50), chaque groupe présentant au moins une ouverture de sortie d'air (46, 48, 50) et au moins l'un des groupes présentant une ouverture d'arrivée d'air sur surface intérieure (48), disposée de manière que l'air s'échappant arrive sur la surface intérieure de l'habitacle,
- un dispositif de déshumidification d'air (28), pour déshumidifier l'air pénétrant dans l'habitacle (20) du véhicule,
- un capteur de température (68) pour déterminer la température de l'air, en particulier à proximité de la surface intérieure (64) de l'habitacle (20) du véhicule,
- un capteur d'humidité (66) pour déterminer l'humidité relative d'air, à proximité de la surface intérieure (64) de l'habitacle (20) du véhicule,
- un dispositif de détermination de point de rosée (74) pour déterminer la température de point de de rosée à l'aide des signaux de mesure du capteur de température (68) et du capteur d'humidité (66),
- un capteur de température extérieure (59), pour déterminer la température ambiante du véhicule,
- un dispositif de mesure de vitesse (76), pour déterminer la vitesse du véhicule,
et **caractérisé par**
- un dispositif de détermination de vitesse d'écoulement, pour déterminer la vitesse de l'écoulement d'air sortant de l'ouverture d'arrivée d'air sur surface intérieure (48),
- un capteur de température d'écoulement d'air (78) disposé dans ou à proximité de l'au moins une ouverture d'arrivée d'air sur surface intérieure, pour déterminer la température de l'écoulement d'air,
- une unité de commande (58) reliée au dispositif de détermination de point de rosée (74), aux capteurs (59, 66, 68, 78), au dispositif de détermination de vitesse d'écoulement et au dispositif de mesure de vitesse (76) et qui, à l'aide de la vitesse du véhicule, de la température ambiante et de la température ainsi que de la vitesse de l'air sortant de l'au moins une ouverture d'arrivée d'air sur surface intérieure, calcule la température de la surface intérieure (64) et qui ensuite, si la température réelle déterminée de la surface intérieure (64) est inférieure à une valeur seuil de température, située au-dessus de la température de point de rosée, de la valeur d'une différence prédéterminable, fournit un signal de commande au dispositif de distribution d'air (40), au dispositif de production d'écoulement d'air (14) et/ou au dispositif de déshumidification d'air (28).

2. Dispositif selon la revendication 1, **caractérisé en ce que** le dispositif de détermination de vitesse d'écoulement présente un capteur de vitesse d'écoulement (80) disposé dans ou à proximité de l'au moins une ouverture d'arrivée d'air sur sa surface intérieure (48).

3. Dispositif selon la revendication 1 ou 2, **caractérisé en ce que** le dispositif de détermination de vitesse d'écoulement détermine la vitesse d'écoulement à l'aide des réglages du dispositif de production d'écoulement d'air (14) et du dispositif de distribution d'air (40).

4. Dispositif selon les revendications 2 et 3, **caractérisé en ce que** le dispositif de détermination de vitesse d'écoulement détermine la vitesse d'écoulement à l'aide du signal de mesure du capteur de vitesse d'écoulement (80) et des réglages du dispositif de production d'écoulement d'air (14) et du dispositif de distribution d'air (10).

5. Dispositif selon l'une des revendications 1 à 4, **caractérisé en ce qu'**un capteur solaire, destiné à déterminer l'intensité du rayonnement solaire touchant la surface intérieure (64), est prévu, le capteur solaire étant relié à l'unité de commande (58), et l'unité de commande (58) calculant la température de la surface intérieure (64) également en prenant en considération l'intensité du rayonnement solaire.

6. Dispositif selon l'une des revendications 1 à 5, **caractérisé en ce qu'**est prévu un dispositif de réglage d'air neuf/air recyclé (16), sur lequel le signal de commande de l'unité de commande (58) peut également agir.

7. Dispositif selon l'une des revendications 1 à 6, **caractérisé en ce que** le capteur d'humidité (68) et le capteur de température (68) disposé à proximité de la surface intérieure (64) et - dans la mesure où il en est prévu un - le capteur de vitesse d'écoulement (80) sont logés dans une monture (70), disposée sur le pare-brise, d'un rétroviseur (72) et exposés à l'écoulement d'air.
